# EUROPEAN PATENT SPECIFICATION

(11) **EP 0 426 249 B1**
(45) Date of publication and mention of the grant of the patent: **12.06.1996**
(21) Application number: 90202858.8
(22) Date of filing: 29.10.1990
(51) Int. Cl.: G05B 19/4061

(54) **Method and apparatus for controlling robots and the like using a bubble data hierarchy placed along a medial axis**
Verfahren und Vorrichtung zur Steuerung von Robotern und ähnlichem zum Gebrauch hierarchisch organisierter "Bubble-Daten", die entlang einer Mittelachse angeordnet sind
Méthode et appareil pour la commande de robots et utilisant une hiérarchie de données-bulle placées le long d'un axe intermédiaire

(30) Priority: 01.11.1989 US 430749
(43) Date of publication of application: 08.05.1991
(73) Proprietor: Philips Electronics N.V., 5621 BA Eindhoven (NL)
(72) Inventor: Warmerdam, Thomas Petrus Hendricus, NL-5656 AA Eindhoven (NL); Verwer, Bernard Johanna Hendricus, NL-5656 AA Eindhoven (NL)
(74) Representative: Strijland, Wilfred

(56) References cited:
- EP-A- 0 268 317
- IEEE TRANSACTIONS ON PATTERN ANALYSIS AND MACHINE INTELLIGENCE, vol. PAMI-1, no. 3, July 1979, Philadelphia, US, pp. 295-305; JOSEPH O. ROURKE et al.: 'Decomposition of Three-Dimensional Objects into Spheres'

## Description

The invention relates to a method for detecting a potential collision between a first object (O) and a second object, whereby space occupied by the first object is represented by a bubble hierarchy.

The invention further relates to a robotic controller for detecting a potential collision between a first object (O) and a second object, comprising memory means (30-42) for representing space occupied by the first object by a bubble hierarchy.

### BACKGROUND OF THE INVENTION

In the field of robotics and automation there has recently been much interest in the problem of choosing paths for a set of objects so they do not collide. Hereinafter, such objects include machines as objects per se, and machines for handling etc. such objects, and also a part of the set may be stationary objects. Such methods are described, for example, in EP-A-317 020 (PHA 21,413), EP 365 626 (PHA 21,431), EP 375 055 (PHA 21,477) and US Patent Application Serial No. 392,636, filed August 11, 1989 (PHA 21,515).

A simpler problem is collision detection among such objects that is: the determination of whether or not a collision will occur when the paths and positions of objects are determined. Prior art collision detection algorithms are described in "A Study of the Clash Detection Problem in Robotics", S. Cameron, 1985, IEEE International Conference on Robotics and Automation , p. 488 ff., which is incorporated herein as background material.

The prior art teaches that the size and shape of objects may be modeled as a series of overlapping circles (in two dimensions) or spheres (in three dimensions). These principles are described, for example, in "A Spherical Representation of the Human Body for Visualizing Movement", S. Badler et al., Proceedings of the IEEE, Vol. 67, No. 10, October 1979 and in published U.K. Patent Application 2,196,763A (May 5, 1988). The prior art also teaches that a hierarchy of such circles or spheres may be effectively used to represent the shape of an object in a data structure at varying levels of detail. See for example "Using an Efficient Collision Detector in the Solution of the Find-Path Problem of Industrial Robots", Sawatzky, El-Zorkany, SPIE In Soc. Opt. Eng., Vol. 579, pp. 131-141 (1985).

The prior art also recognizes that, in some cases, the centers of spheres which were used to represent an object may be used to find the medial axis or skeleton of an object. See, for example, "Decomposition of Three-Dimensional Objects into Spheres", 0'Rourke and Badler, IEEE Transactions on Pattern Analysis and Machine Intelligence, Vol. PAMI-1, No. 3, July 1979.

In the description and claims which follow, spheres and circles of the above-mentioned data structure is referred to as a bubble hierarchy.

In a typical bubble hierarchy, the top or root of the hierarchy is a single spherical bubble, the enclosing bubble which encloses an entire object. This is the most coarse level of detail in the data structure. Within the top bubble, there are a small plurality of bubbles, each of which encloses a portion of the object and which, between them, enclose the entire object. Within each of the bubbles at this second, successor level, there may be another plurality of bubbles, each of which encloses a smaller portion of the object. The expansion of bubbles to enclose finer level of detail continues until the bottom of the bubble hierarchy is reached. The bubbles at the bottom of the hierarchy each describe a small fragment of the object. In the simplest case, these bubbles are assumed to be solid; i.e. every point in the interior of such a bubble is assumed to be in the interior of the object.

A bubble hierarchy is useful for determining whether a point is inside or outside of an object and whether two objects (possibly each represented by separate bubble hierarchies) intersect. The general technique for answering these questions is called bubble bursting. In a typical use of bubble bursting for determining whether a point is inside an object, a point-in-bubble test is first applied to the enclosing bubble. If this succeeds, (i.e., the point is found to be inside the enclosing bubble) then the bubble is burst, revealing the group of successor bubbles immediately below it in the hierharchy. The test is repeated with each of these bubbles. Wherever the test succeeds, the tested bubble is burst, revealing the bubbles at the level immediately below it and those bubbles are then tested. The procedure terminates if the point is found to be inside a bubble at the bottom of the hierarchy (in which case the point is inside the object) or if the point is found to be outside all the remaining bubbles after a certain number have been burst.

While techniques for using bubbles to plan and control the motion of machines and robots are well-known in the art, the problem of finding an optimum placement of bubbles to represent a given object remains. Computational time can be decreased and machine speed increased if an optimal bubble placement is determined, yet many bubble placement methods which have been suggested in the prior art operate efficiently in two dimensional systems but which become complex and time consuming when expanded to the representation of three dimensional objects and systems.

A method and apparatus as described in the preamble is known from the European Patent Application EP-A-0 268 317. This reference teaches the usage of an estimate for the space occupied by a stationary object, by means of a bubble hierarchy. At the highest level, one bubble represents the object in a very coarse way. This level yields a pessimistic view on the collision danger between a point and the object, i.e. when the point is inside the bubble it could collide with the object but that is not certain and must be verified at a more detailed next level down. At that next level down, the object is represented by two or more smaller bubbles that taken together represent the object in a finer way. At the lowest level, the object is represented by bubbles that are assumed to be solid. When taken together, those solid bubbles constitute the object as precisely as desired for the application at hand.

### SUMMARY OF THE INVENTION

It is an object of the invention to provide a method as described in the preamble, which method is efficient with respect to the required computational time. To this end the method according to invention is characterized in that the method includes the steps of:
- locating the medial axis system (B) of the first object,
- creating the bubble hierarchy on this medial axis system (20 - 26), and
- detecting the potential collision by determining whether the second object collides with any of the bubbles in the bubble hierarchy.
The creating of the bubble hierarchy requires a relatively small computational effort and results in an efficient application of the method in detecting collisions.

An embodiment of the method according to the invention is characterized in that the step of creating the hierarchy comprises a top-down procedure of:
- first placing a root bubble which is centred at the centre of the medial axis system and has a radius substantially equal to the maximum distance from said centre to the contour of the first object,
- next, if the medial axis system has a plurality of branch lines, placing a plurality of first successive bubbles each of which encompasses a distinct part of the object which is described by one of said branch lines, and
- then successively dividing each line of the medial axis system into at least two new line parts and placing a sequence of next successive bubbles each of which encompasses a distinct part of the first object which is described by one of said new line parts.
This procedure of creating the bubble hierarchy is easy to implement and requires little computational effort.

An embodiment of the method according to the invention is characterized in that the step of creating the hierarchy comprises a bottom-up procedure of:
- first representing the medial axis system as a large plurality of discrete points,
- next placing the centres of a plurality of lowest level bubbles at said discrete points, where the radius of each bubble is equal to the minimum distance from the corresponding centre point to the contour of the first object, and
- then successively creating new bubbles by merging the lowest level bubbles to successively create higher order bubbles into the bubble hierarchy and repeating this step until a single one root bubble remains.
This bottom-up procedure of creating the bubble hierarchy is an easy to implement alternative and requires little computational effort.

The bubble transform method of the present invention is particularly useful since it is easily scaled from two to three or more dimensions with minimal increases in the computational complexity.

The robotic controller according to the invention is characterized in that the controller includes computational means for:
- locating the medial axis system (B) of the first object,
- creating the bubble hierarchy on this medial axis system (20 - 26) to be stored in the memory means, and
- detecting in the memory means the potential collision by determining whether the second object collides with any of the bubbles in the bubble hierarchy.
This provides an apparatus which is capable of executing the methods of the invention.

Other advantageous embodiments of the method and the controller according to the invention are recited in the dependent claims.

### DESCRIPTION OF THE DRAWINGS

The invention can be understood with reference to the attached drawings in which:
Figure 1 conceptually illustrates the medial axis system of an object;
Figures 2 and 3b are flow charts of a top down method for placing bubbles along the medial axis system;
Figure 3a illustrates the geometry used in the program of Figure 3b;
Figure 4 illustrates the geometry used in a bottom-up method for placing bubbles; and
Figure 5 is a data structure for representing a bubble hierarchy.

### DESCRIPTION OF THE PREFERRED EMBODIMENTS

Preferred embodiments of the invention will be explained hereinafter, inter alia, with reference to the Appendix, that contains a listing, in c source code, of computer programs which implement the invention.

Now, the medial axis system of an object, or for short, the medial axis, is realized by skeletonization of the object which is a data processing operation on a data structure that represents the shape of the physical object. Such data structure may be given in various ways. A very elementary organization is to give, with respect to a particular reference origin and rotational orientation of the physical object, a set of rastered pixels or points that are inside the object, whereas all other rastered pixels or points are outside the object. This approach caters for objects of arbitrary shape, but the granulation of the object remains finite. Another organization of the data structure is to limit the volume of the object by a set of intersecting planes, such as flat planes, cylinders and globes. By themselves, the planes may have complicated mathematical expressions. This approach has infinitely fine granularity, but the decision of declaring a particular coordinate value inside or outside the object may require appreciable data processing. Moreover, the shape of the object should have an analytical expression. Now, skeletonization is a known operation in image processing. Its importance lies in the data reduction of a set of image points to a set of line segments, the "medial axis" or skeleton. in the continuous case the medial axis of an object is defined to be a line with the same topology as the object itself connecting points which lie midway between boundary elements of the objects. In the discrete case, the medial axis satisfies four conditions: it has the same connectedness as the object; it is one pixel thick; it preserves the end points; and it lies in the middle of the object. By itself, the medial axis of certain objects may be of a very elementary form, such as when the object is a cylinder. On sthe other hand, the medial axis may contain various different branches, bifurcations, etcetera.

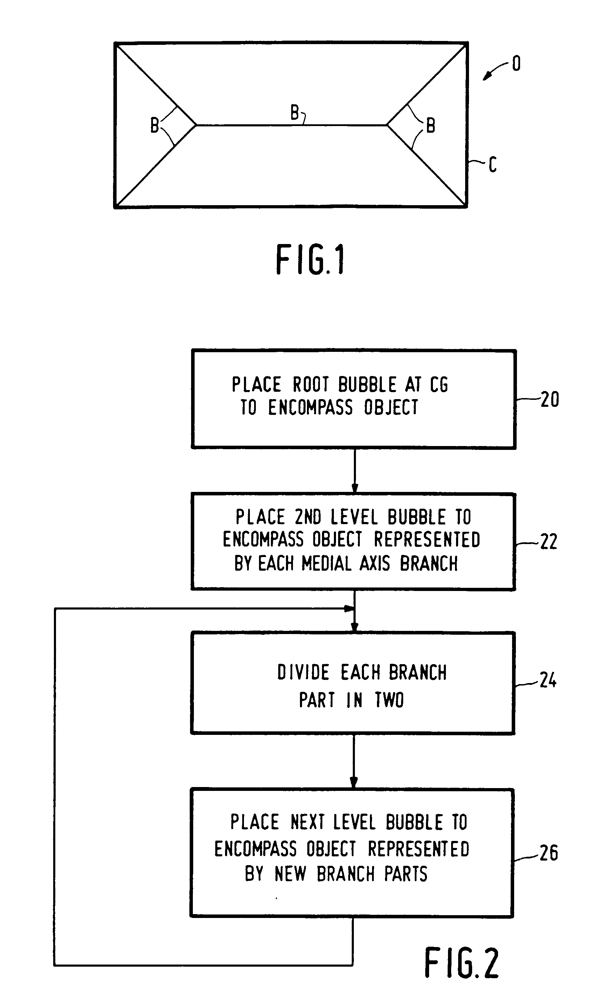

Figure 1 illustrates the medial axis of a two dimensional rectangular object 0 having a contour C. The medial axis consists of a group of five connected line segments or branches B. Further properties of the medial axis, together with various algorithms for calculating its coordinates, are described in "Path Planning in a Three Dimensional Environment", Ruff and Ahuja, IEEE Catalog, No. 84CH2046-1, 1984 and in "Improved Metrics in Image Processing Applied to the Hilditch Skeleton", Verwer, IEEE Catalog, No. CH2614-6/88/0000/0137. For brevity, the generation of the medial axis itself will not be discussed further herein.

In a preferred embodiment which is implemented in the routines with the prefix "EUSK" listed in the Appendix, the medial axis is calculated using the Hilditch Skeletonization method by testing Hilditch conditions each time all pixels with a certain distance value have been stored. The calculation uses a bucket sort with directional information for improved efficiency. The invention is not limited, however, to any specific algorithms for the calculation of medial axis coordinates.

In many applications of bubble hierarchies in collision avoidance and robotics, the contours of objects are accurately known and pre-digitized, since the objects are often designed and produced using computer aided design (CAD) data bases. The position of the medial axis can then be calculated directly without the necessity for first determining a bubble placement geometry, as taught by O'Rourke and Badler (supra).

In accordance with the invention, a bubble hierarchy representing an object is derived by placing bubbles on the medial axis of the object.

In a first embodiment utilized to generate the bubble hierarchy, as illustrated in Figure 2, the root bubble is first placed around the center of gravity of the object (20) and has a radius equal to the maximum distance from the center of gravity to the contour. The first level successors of the root bubble each encompass the object parts described by the branches of the medial axis (22). Each next level of the hierarchy cuts each branch in two to yield two new bubbles which sbetter represent the object (24), although in certain circumstances another factor than two would be appropriate. After the division, the next bubble level is generated (26). At each level of bubbles, all -inside- points or pixels of the object are within at least one of the bubbles at that level. Various strategems or iteration steps sequences may be required to reach such effect. The loop consisting of blocks 24, 26 may be traversed a predetermined number of times, or some creterion may be implemented (not shown) to decide whether or not a further traversal is required.

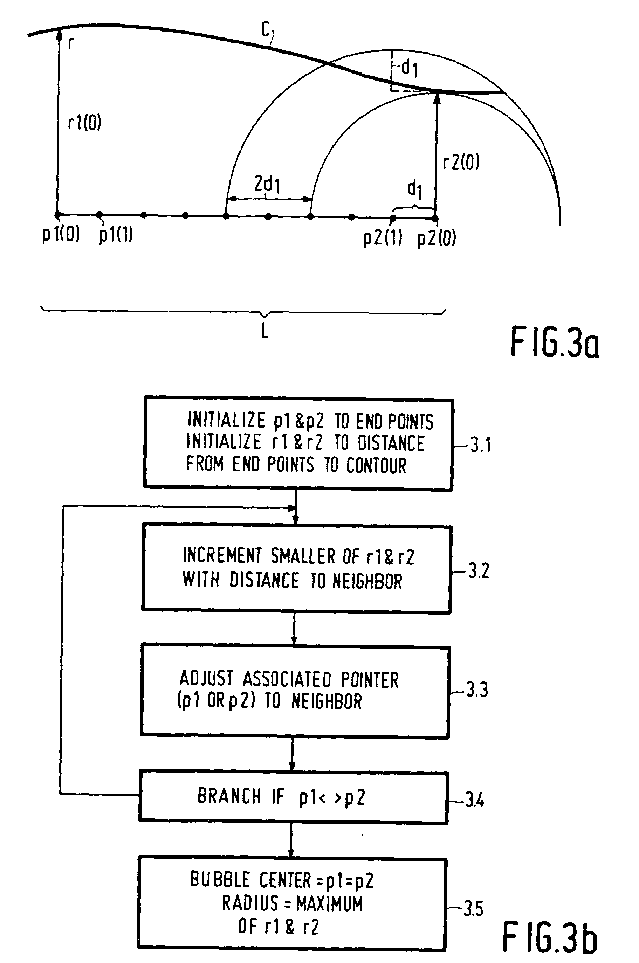

Now, by way of example, the method according to the invention is illustrated in a two-dimensional geometry with reference to Figure 3a, for each line piece L of the medial axis branch, the following procedure, illustrated in the flow chart of Figure 3b, is used to define the encompassing bubble.

The line segment is first represented as a list of discrete medial axis points, which are depicted along that segment.
3.1 Two pointers, p1 and p2 are initialized, respectively, to the beginning p1(o) and end p2(o) of the list. Pointer p1 has a variable r1 associated with it which is initilaized to the value r1(o) of the distance from the point at the start of the list to the contour of the object, that is the closest point on the contour. Likewise, pointer p2 has a variable r2 associated with it which is initialized to the value r2(o) of the distance from the point at the end of the list to the contour.
3.2 The actual values of the variables r1 and r2 are compared and the variable having the lowest value, in the particular initial case r2, is incremented by the distance d1.
3.3 The associated pointer, p1 or p2, previously pointing to the list element that had its variable incremented in 3.2, is adjusted to point to the next element of the list (if p1(o)) or to the previous element of the list (if p2(o)) and the process reverts to 3.2 unless the branching condition of 3.4 becomes true.
3.4 The process stops if p1 points to the same element as p2.
3.5 The bubble, encompassing the geometry represented by this line segment of the medial axis has its center at the point on the line now indicated by p1 and p2 and has a radius equal to the maximum of the values of r1 and r2. In practice, it has been found that the process so sdescribed gives good results. In cases where curve c would have a big bulge in the middle of Figure 3a, leading to a large value of the actual radius that could extend beyond the incremented values of r1 and r2, usually the local skeleton has an additional branch that should generate its own bubble(s) separately. The looping process (steps 3.2, 3.3) terminates if dividing a medial axis segment would be irrelevant, such as when it only has one element of the list. Furthermore, whereas the example related to a two-dimensional geometry, similar procedure would lead to constructing a hierarchical bubble set around a medial axis system which now could also extend in three dimensions. For brevity, this procedure, which is virtually identical to the one described above only circles now being represented by bubble "globes", has not been described in detail. The top-down method is implemented in two dimensions as "bubble.c" in the Appendix.

### DESCRIPTION OF THE BOTTOM-UP PROCESS

A second, alternate method for placing bubbles on the medial axis starts at the lowest (finest representation) level of the bubble hierarchy and combines bubbles from the bubbles from the bottom up until the root bubble is generated.

The medial axis is divided into a larger number of discrete points and to each point thereof a bubble is assigned, the center of the bubble being located at the point in question and the radius of the bubble being equal to the minimum distance from the point to the contour. If the number of points is sufficiently large, all points within the contour lie within at least one lowest-level bubble.

The smallest bubble generated in the previous step is merged or combined with its smallest neighbour or neighbours to generate a new bubble and the process is repeated until the root bubble is found.

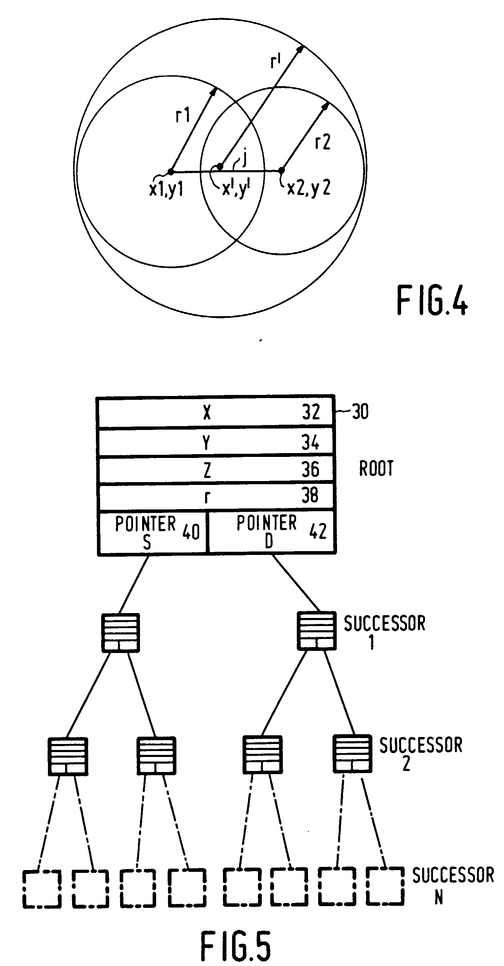

With reference to Figure 4 (two dimensions), the merge operation finds a new bubble from two old bubbles with the following formulas, that apply to two or three dimensions:$\text{r' = (r1+j+r2)/2}$$\text{x' = 1/2(x1+x2+} \frac{\text{r1-r2}}{\text{j}} \text{(x1-x2))}$$\text{y' = 1/2(y1+y2+} \frac{\text{r1-r2}}{\text{j}} \text{(y1-y2))}$$\text{z' = 1/2 (z1+z2+} \frac{\text{r1-r2}}{\text{j}} \text{(z1-z2));}$ where r' is the new radius, r1 and r2 are the radii of the old bubbles and j is the distance between the centers of the old bubbles, (x', y', z') are the three dimensional coordinates of the center of the new bubble, and (x1, y1, z1) and (x2, y2, z2) are the coordinates of the respective centers of the old bubbles. As is clear from Figure 4, the center of the "new" bubble need not lie on the interconnection line between the centers of the bubbles that were combined into it. Similar formulae would apply in case of combination of three or more bubbles, the distance j then being between the two extreme bubbles of the subset. Furthermore in such case, the outer bubbles could possibly carry less weight than the intermediate bubbles.

The bottom-up method is implemented as "blower,c" in the Appendix.

The bubble placement method of the present invention has an advantage over those of the prior art in that is is essentially dependent only on distance calculations and may thus be readily expanded as the dimensionality of the system increases without substantial increase in the complexity of the calculation.

Figure 5 represents a data structure for a bubble hierarchy in a computer. Each bubble is represented as a record, which, as indicated for root bubble 30 indicates variables specifying the coordinates of the bubble center (x/32, y/34, z/36), the bubble radius (r/38) an pointers 40, 42 to the successor bubbles S, D in the hierarchy tree. For the successor bubbles, the record structure is similar. As told, the structure of the tree need not be binary. The pointers are used in the bubble-bursting procedure.

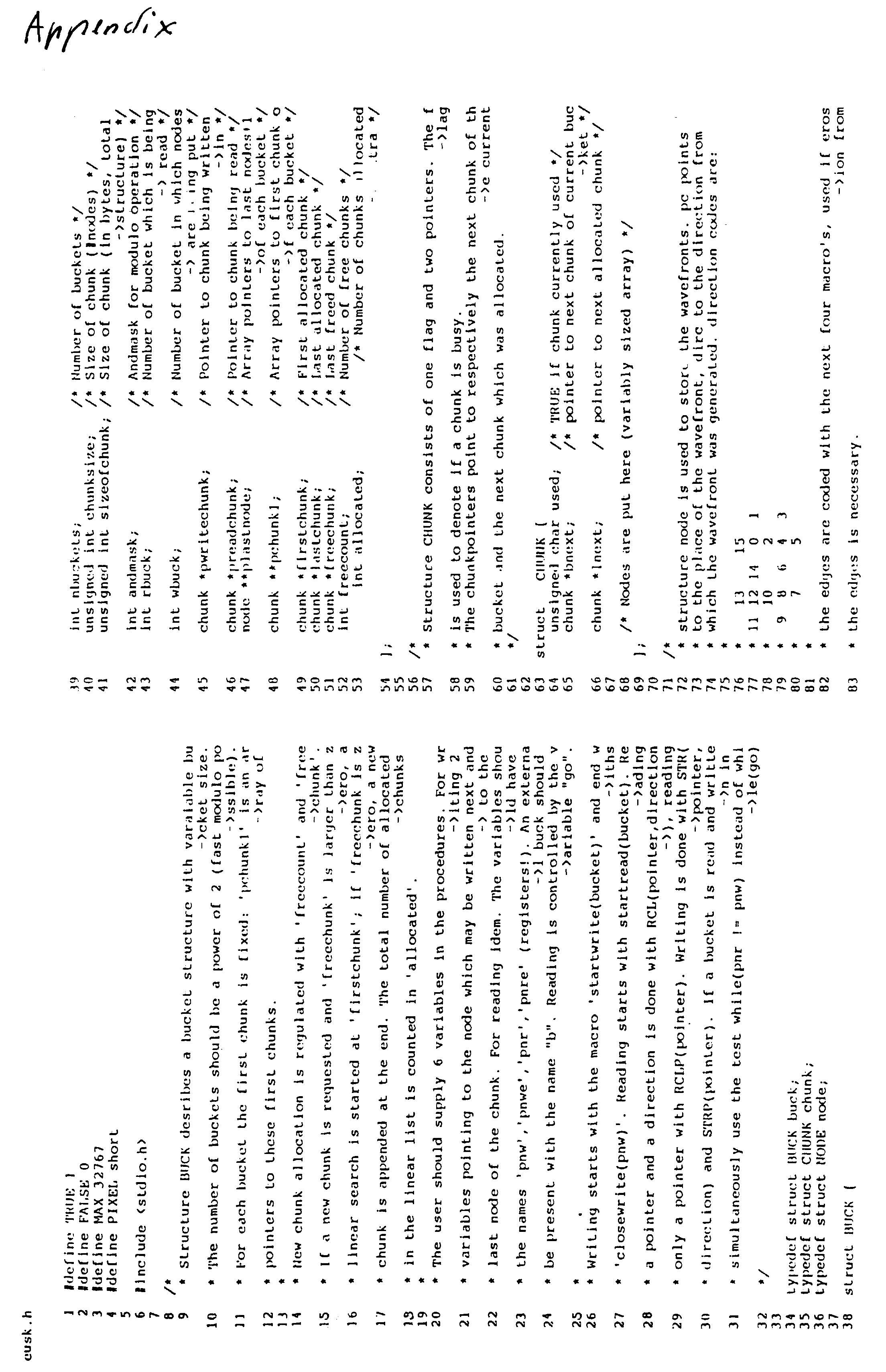

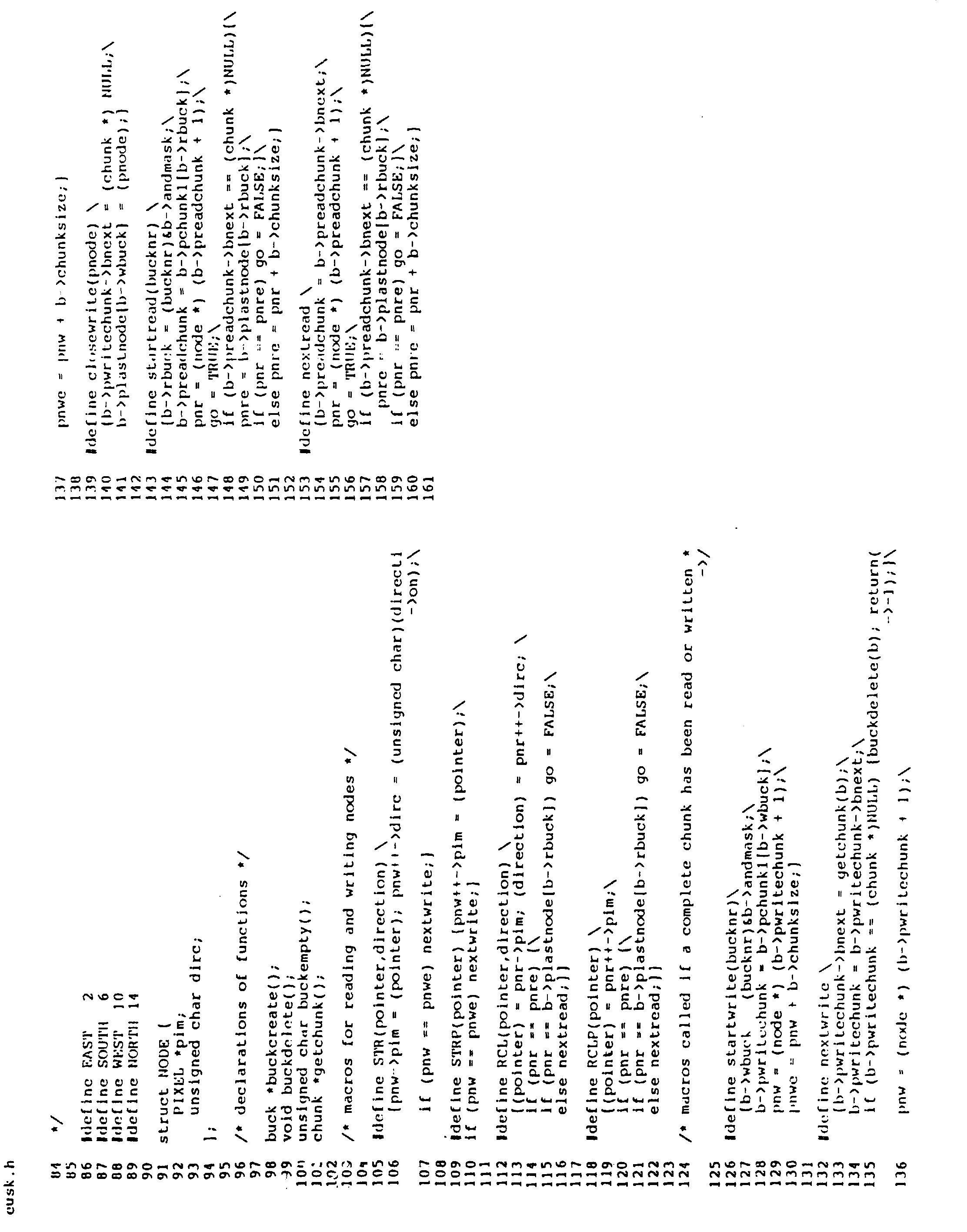

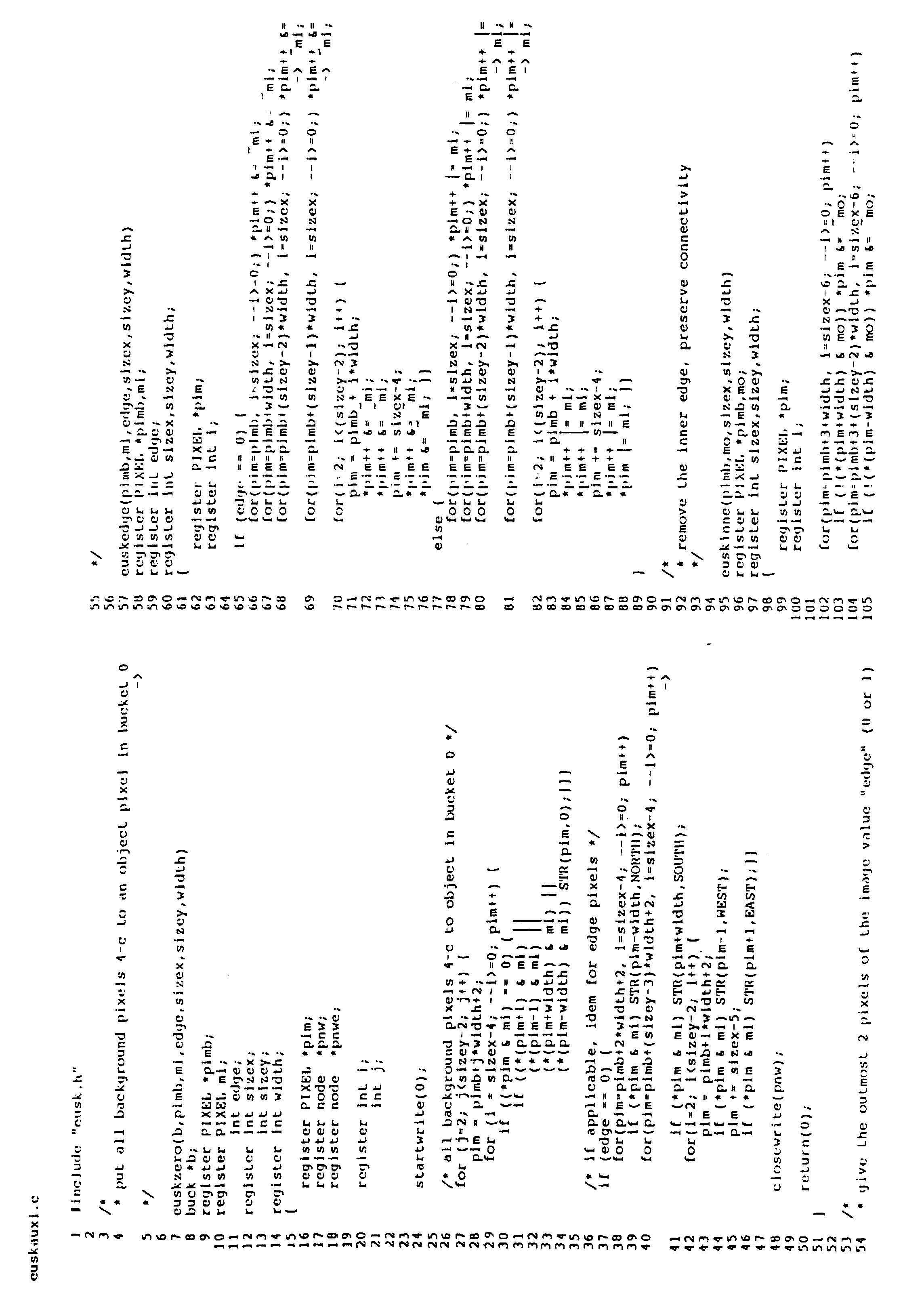

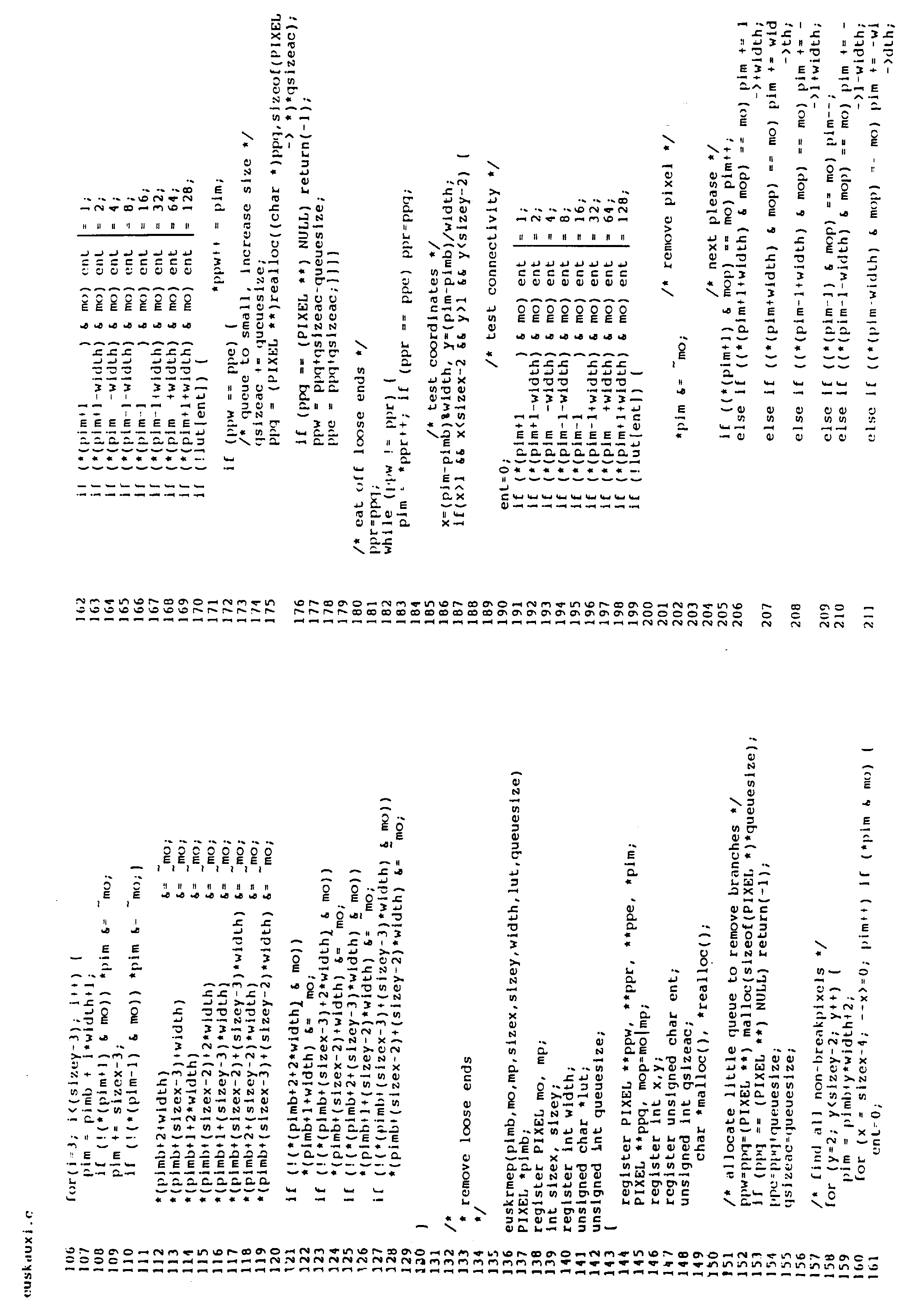

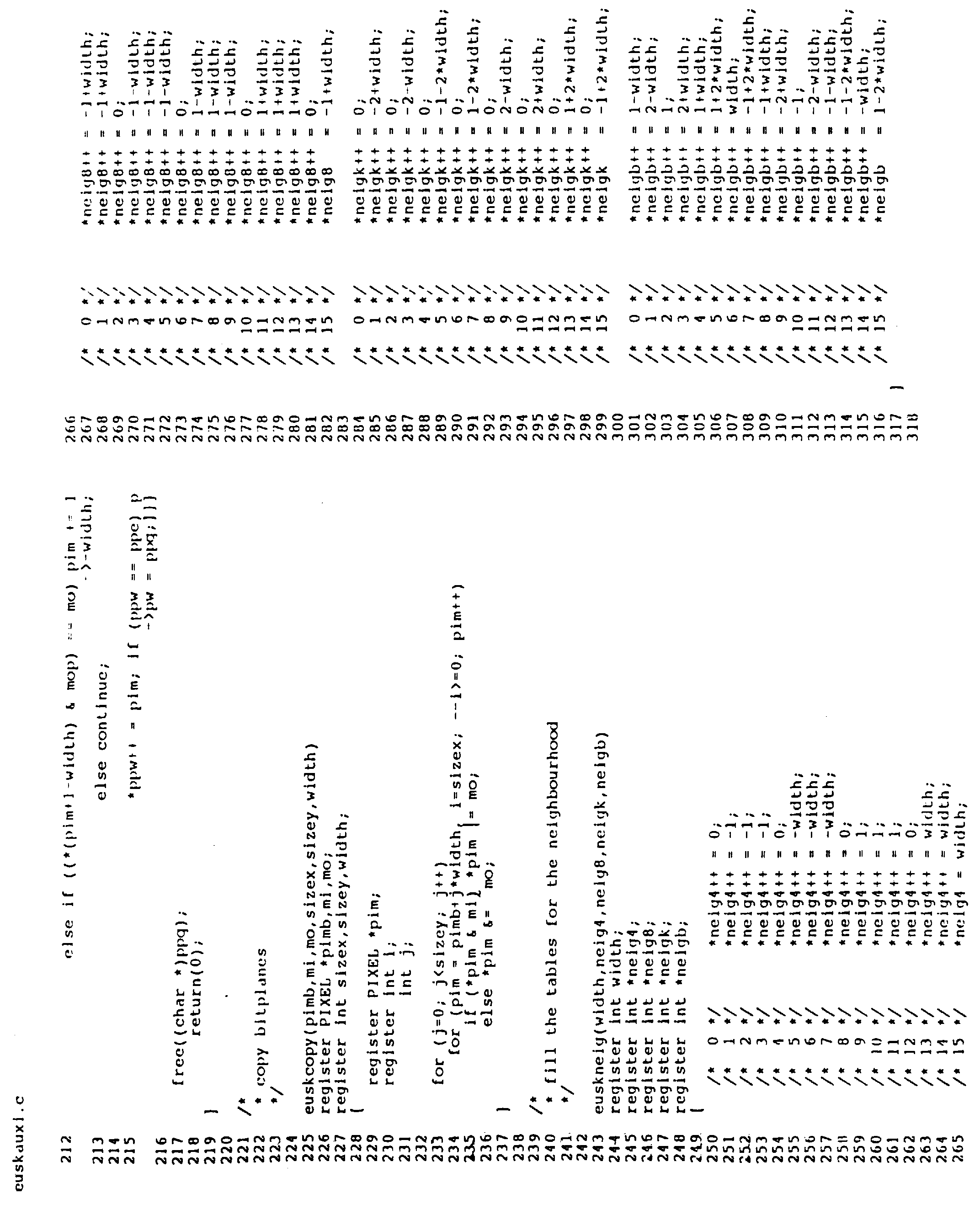

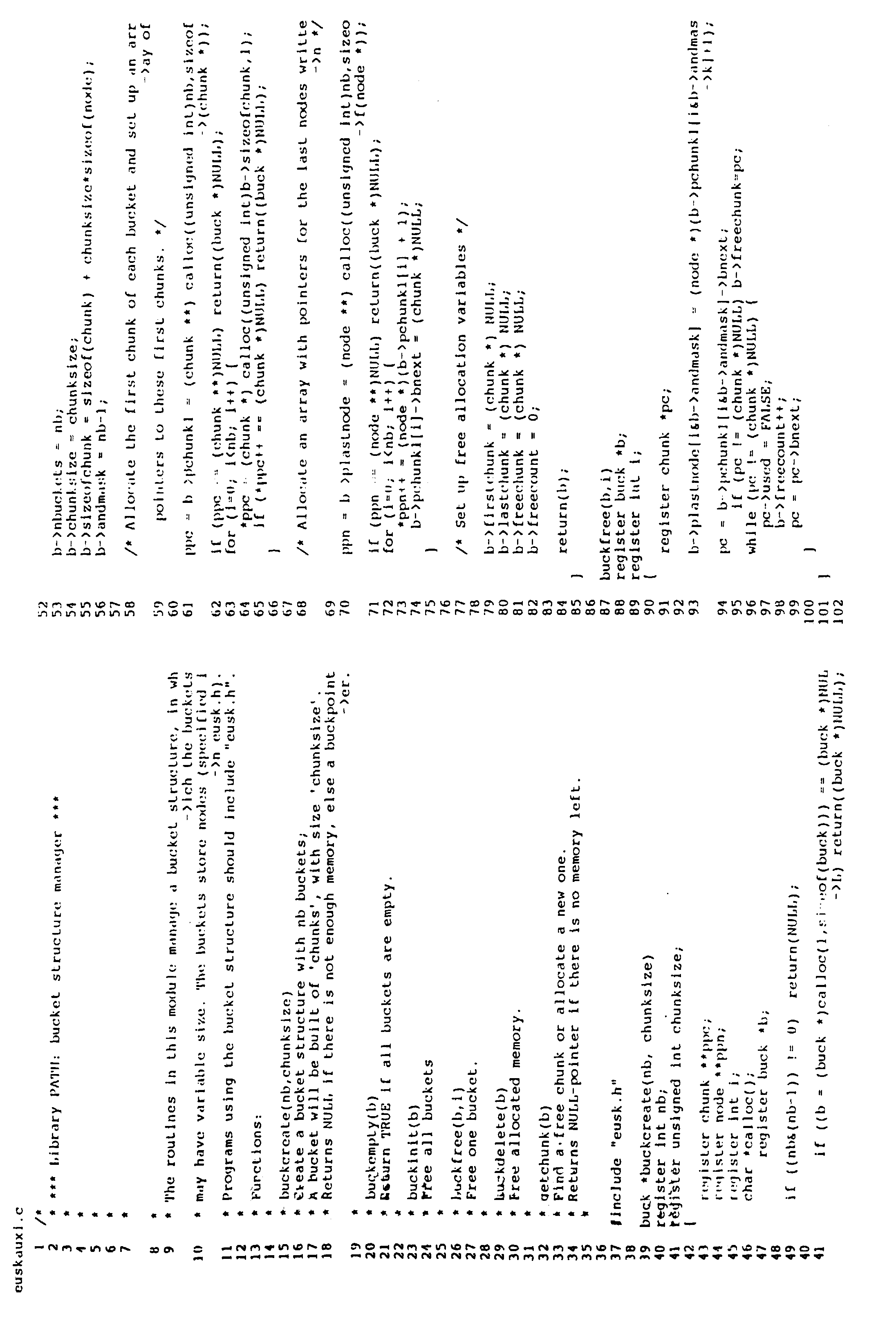

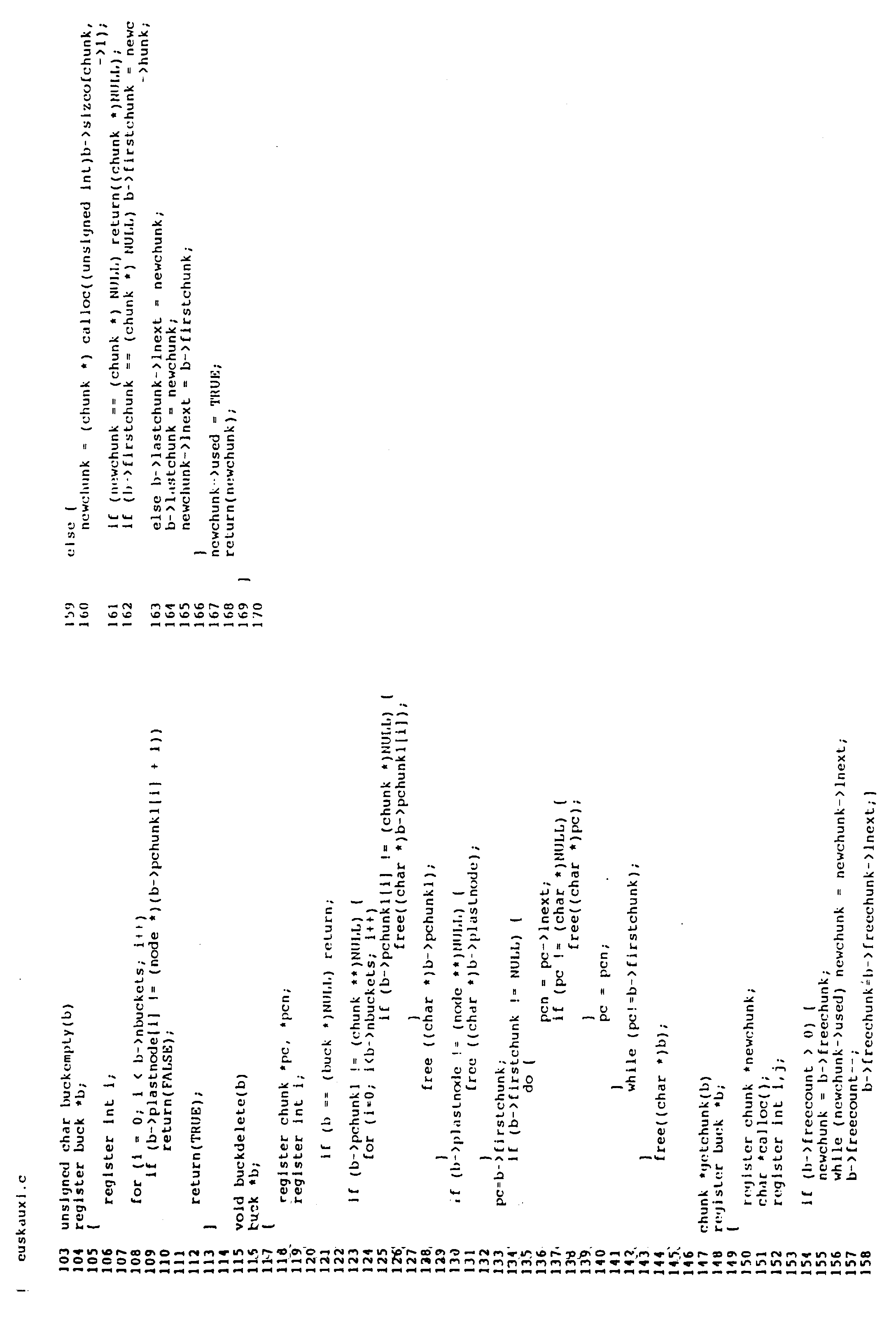

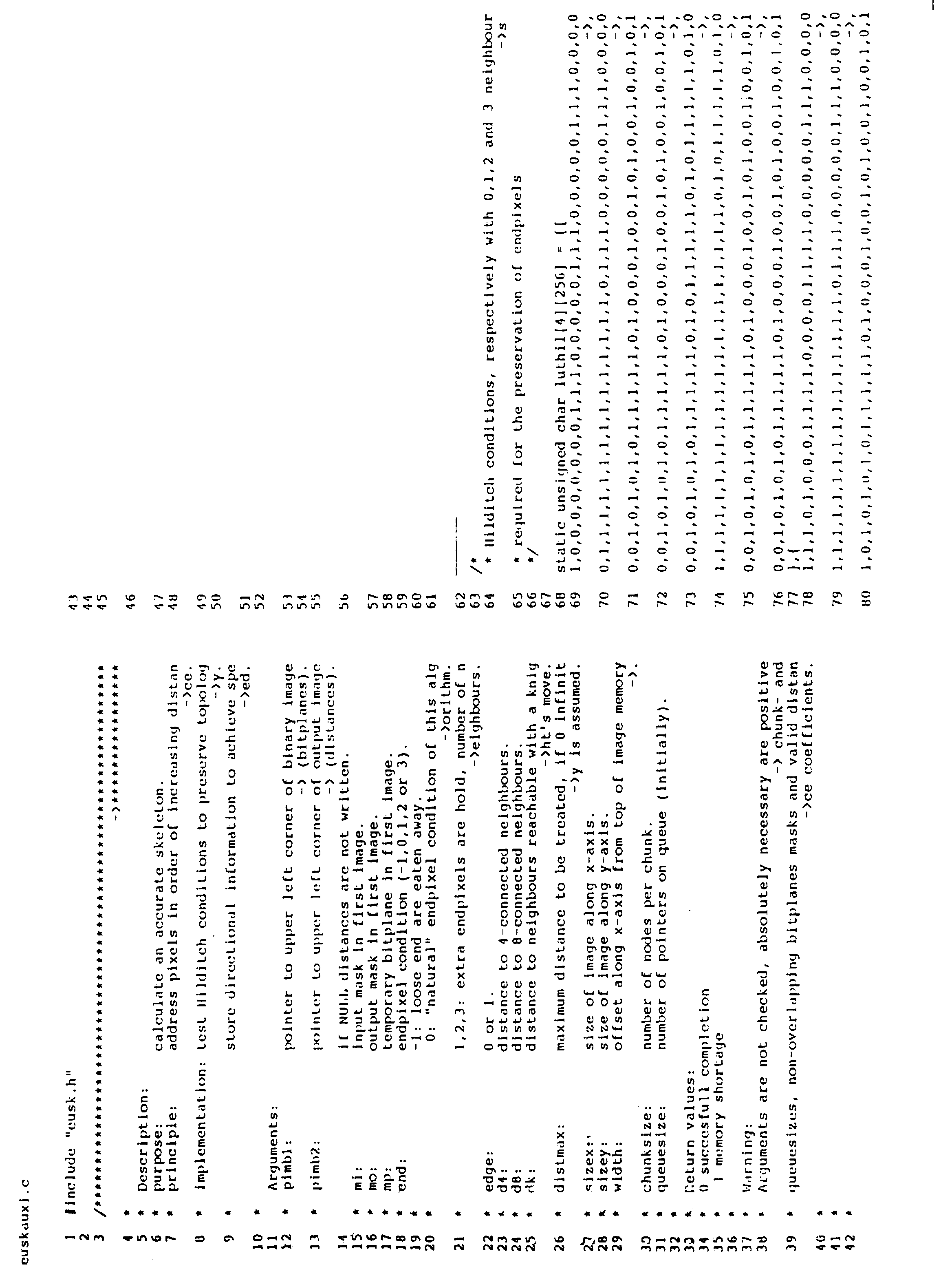

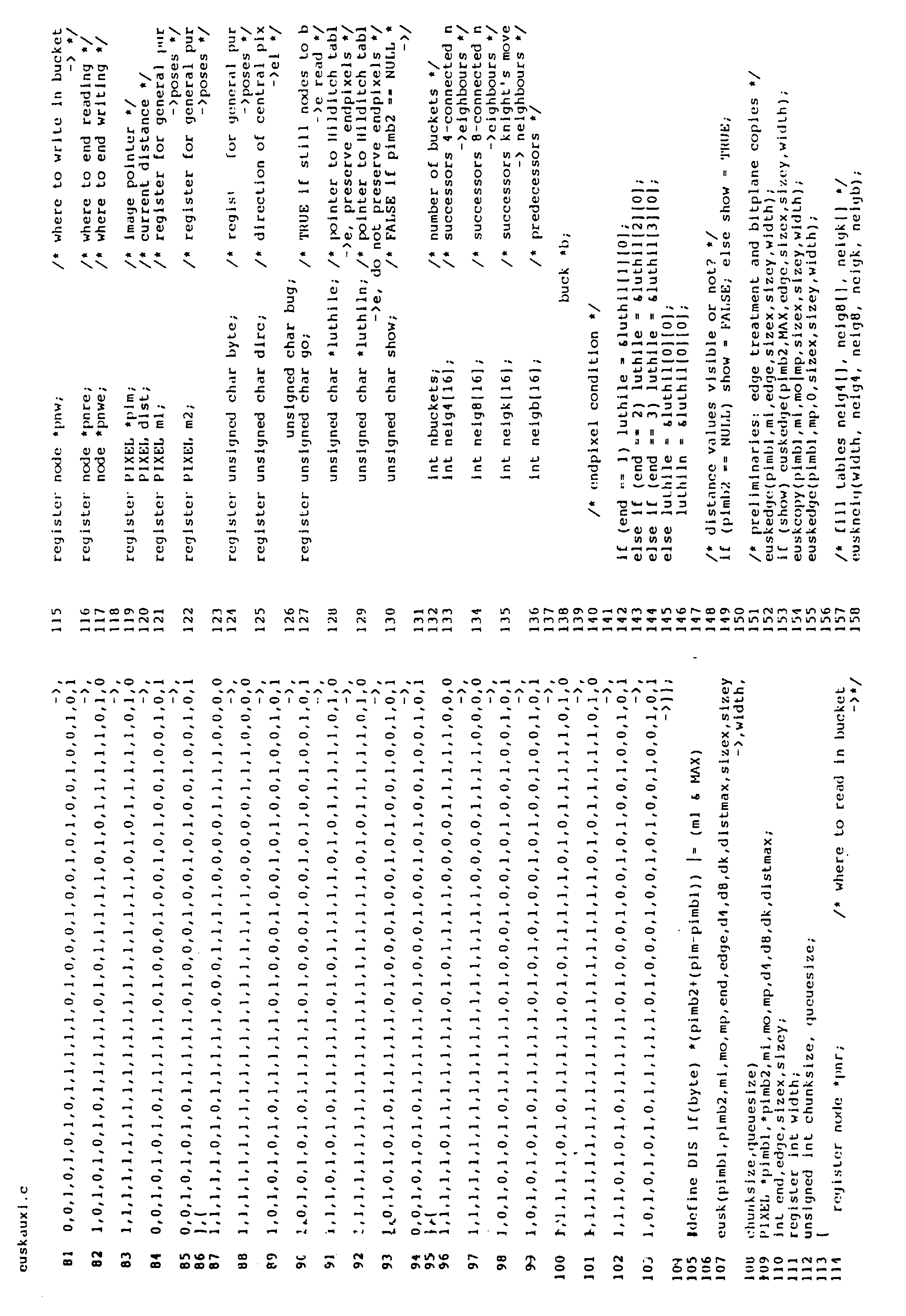

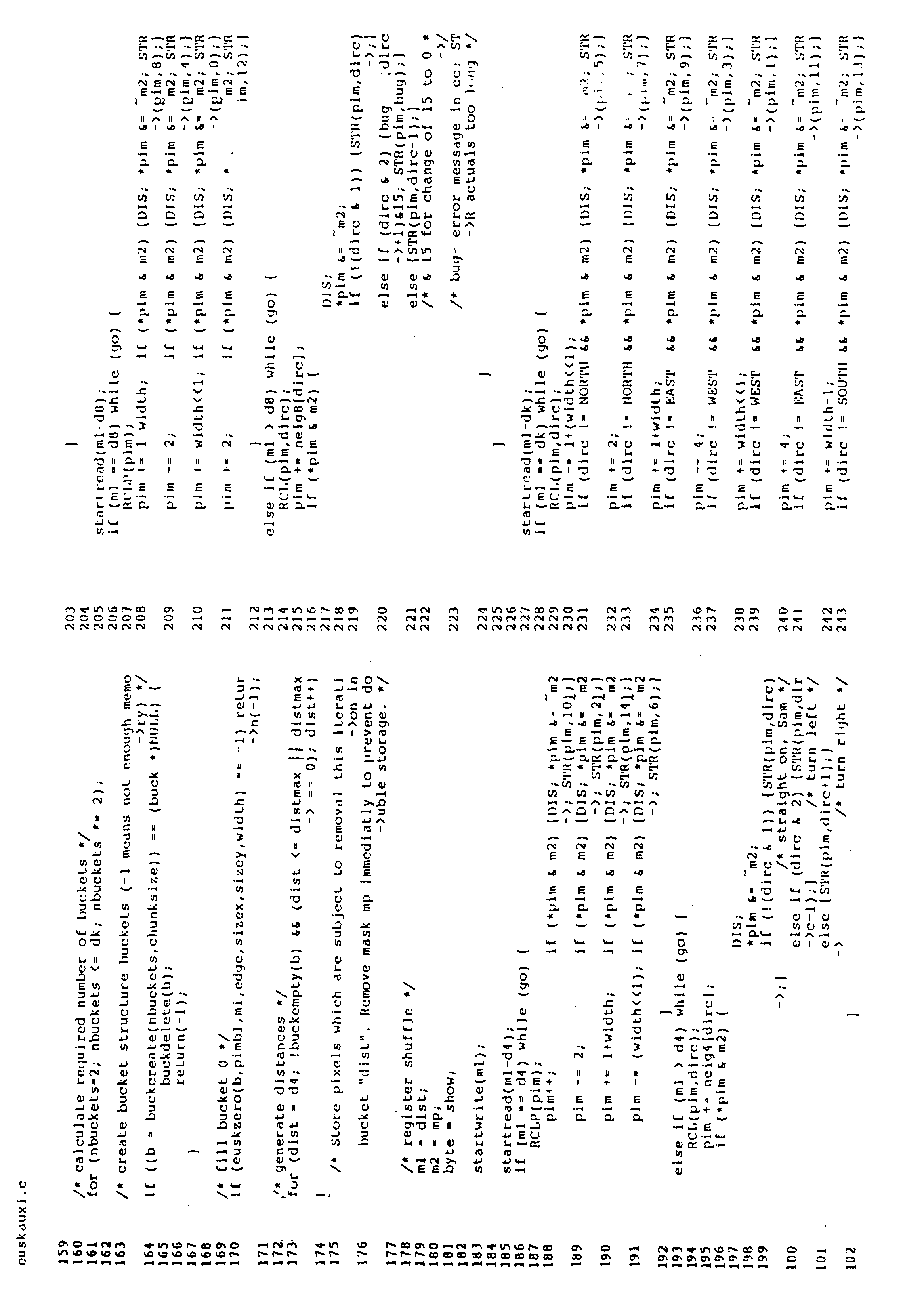

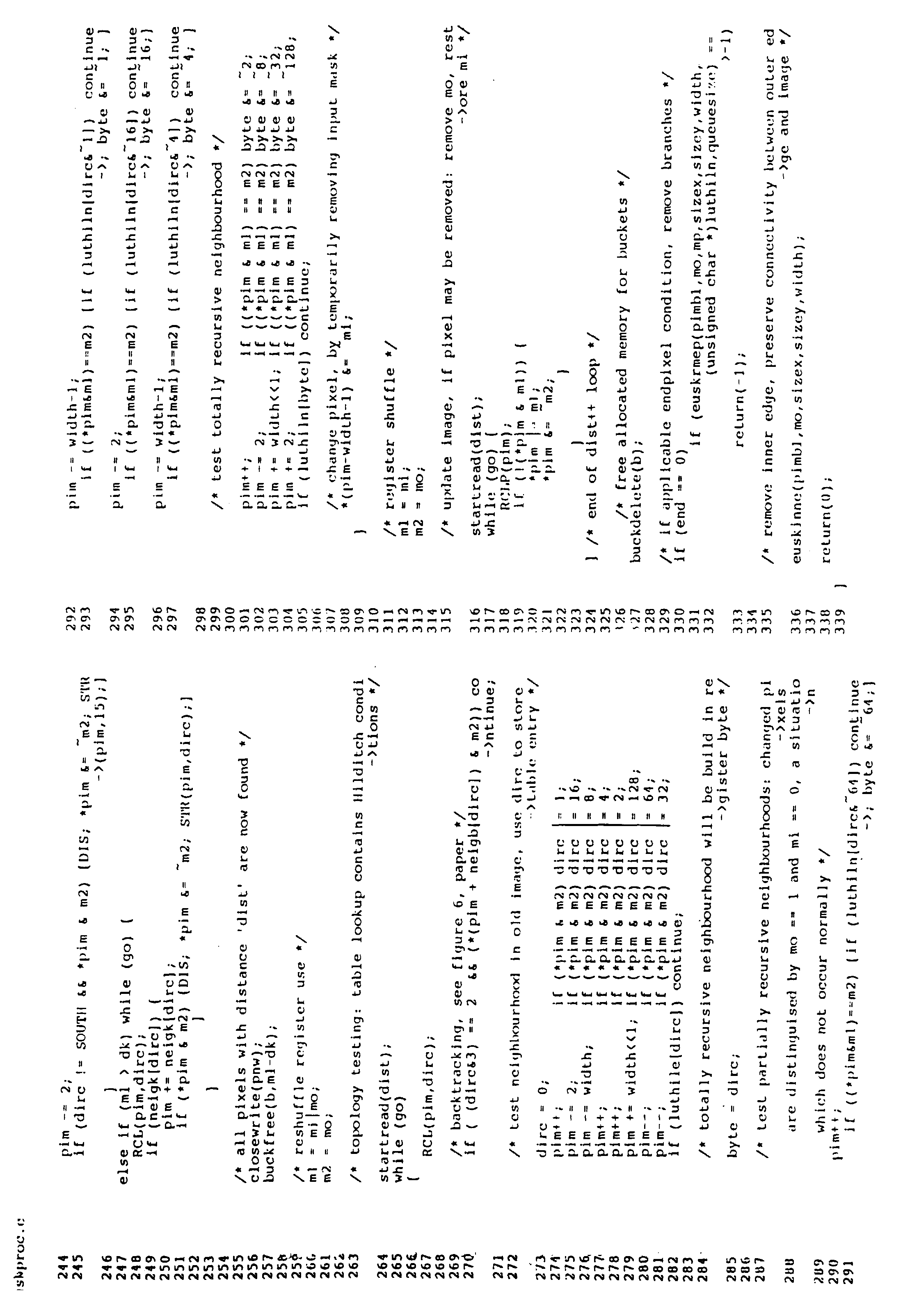

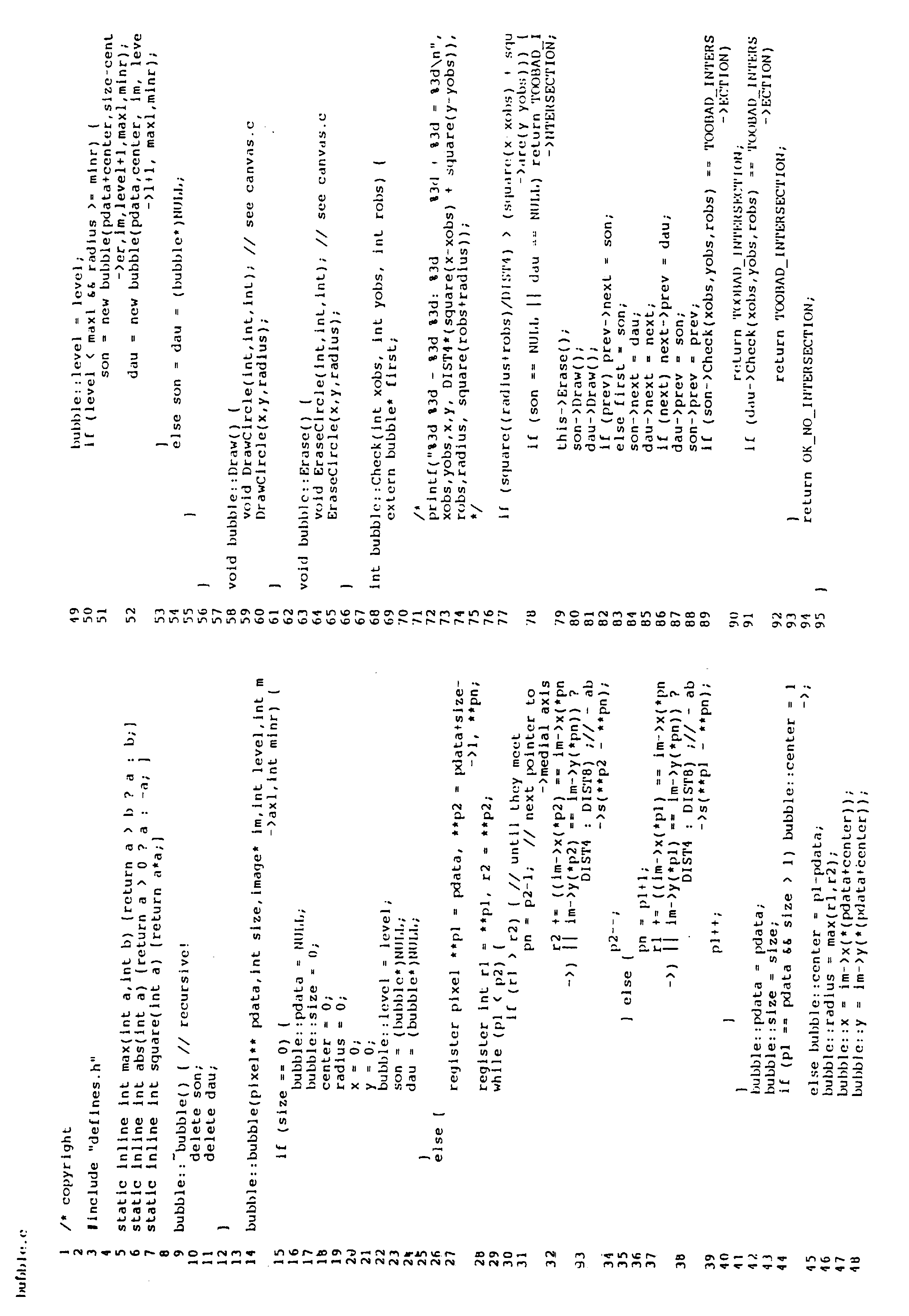

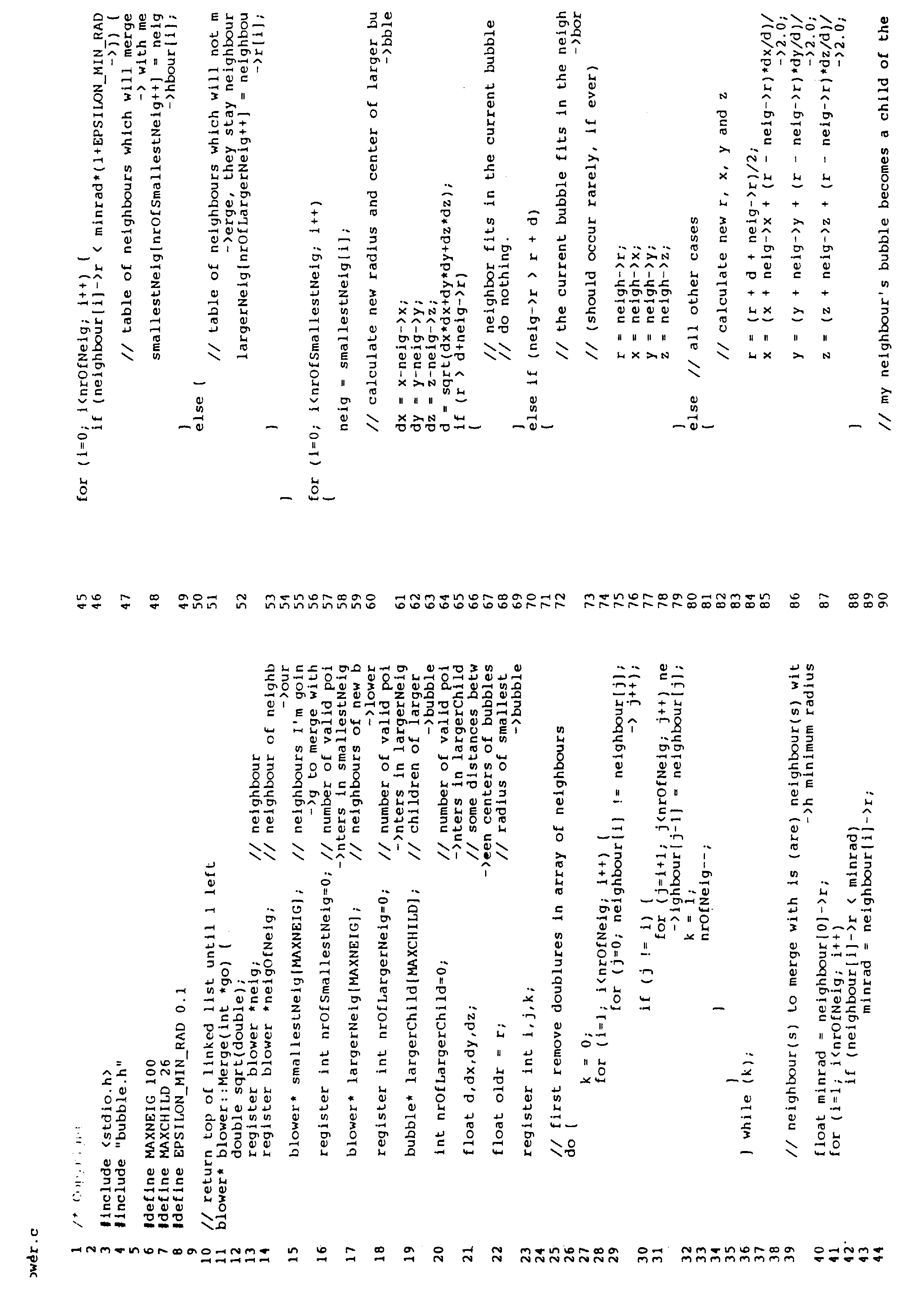

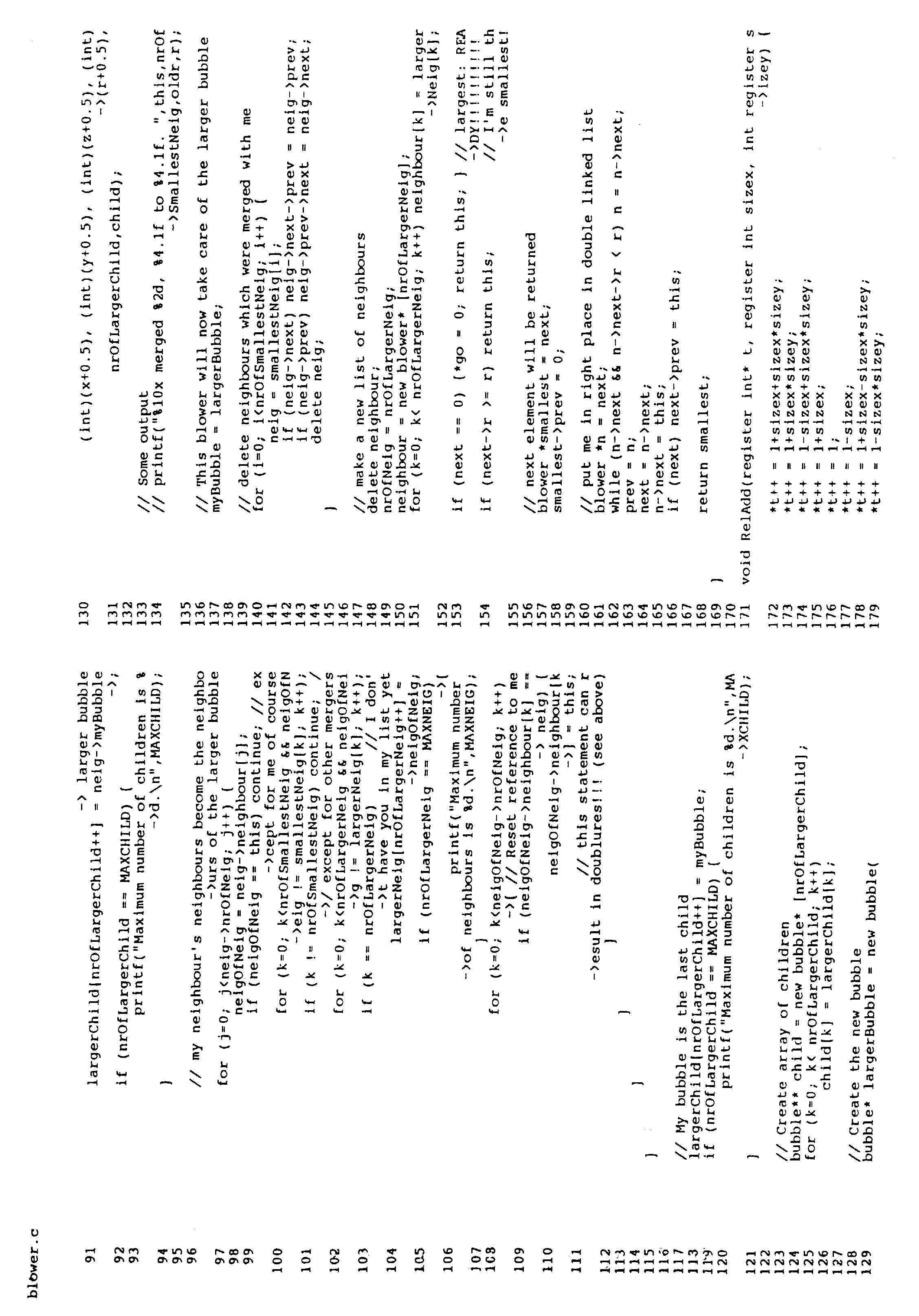

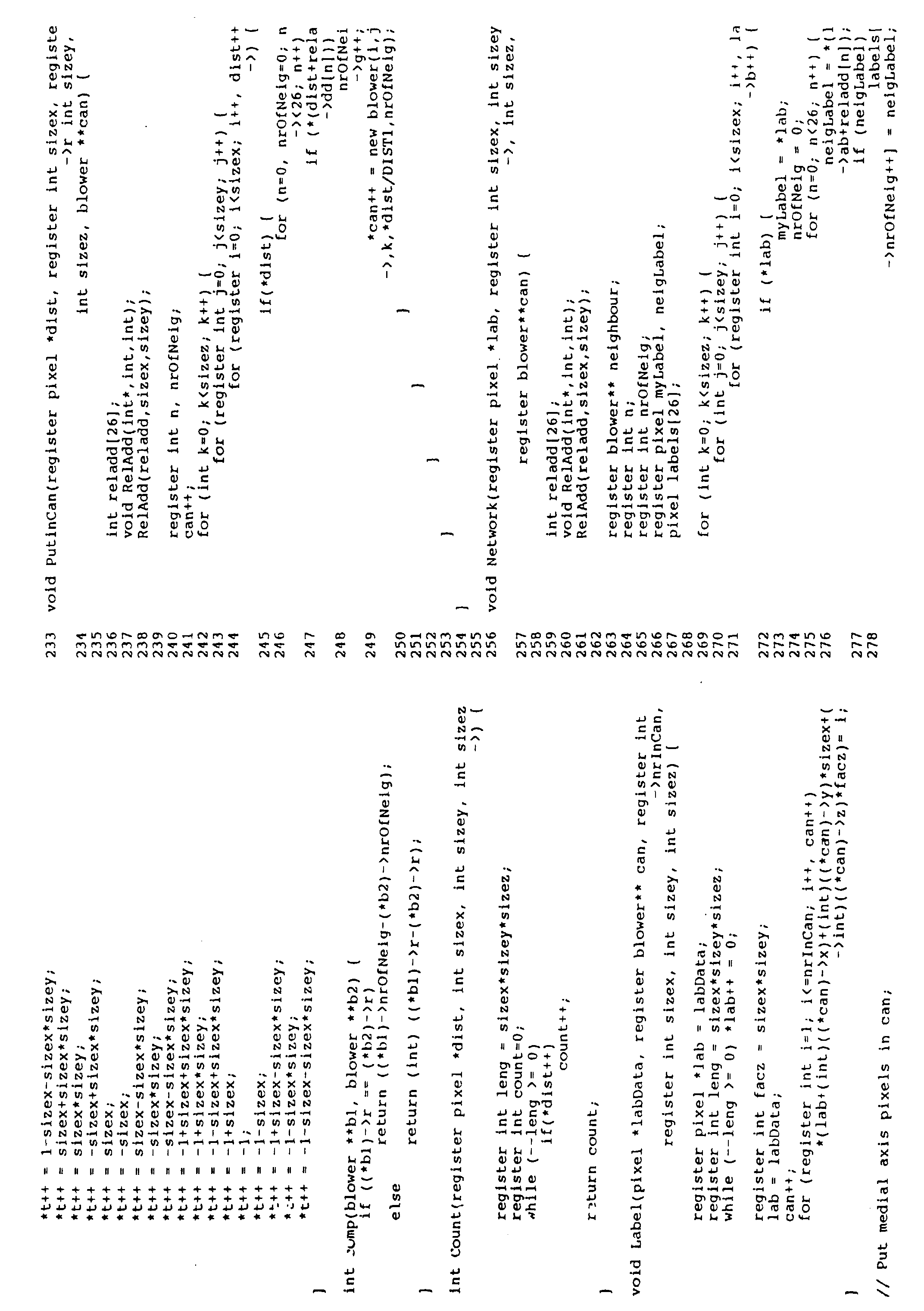

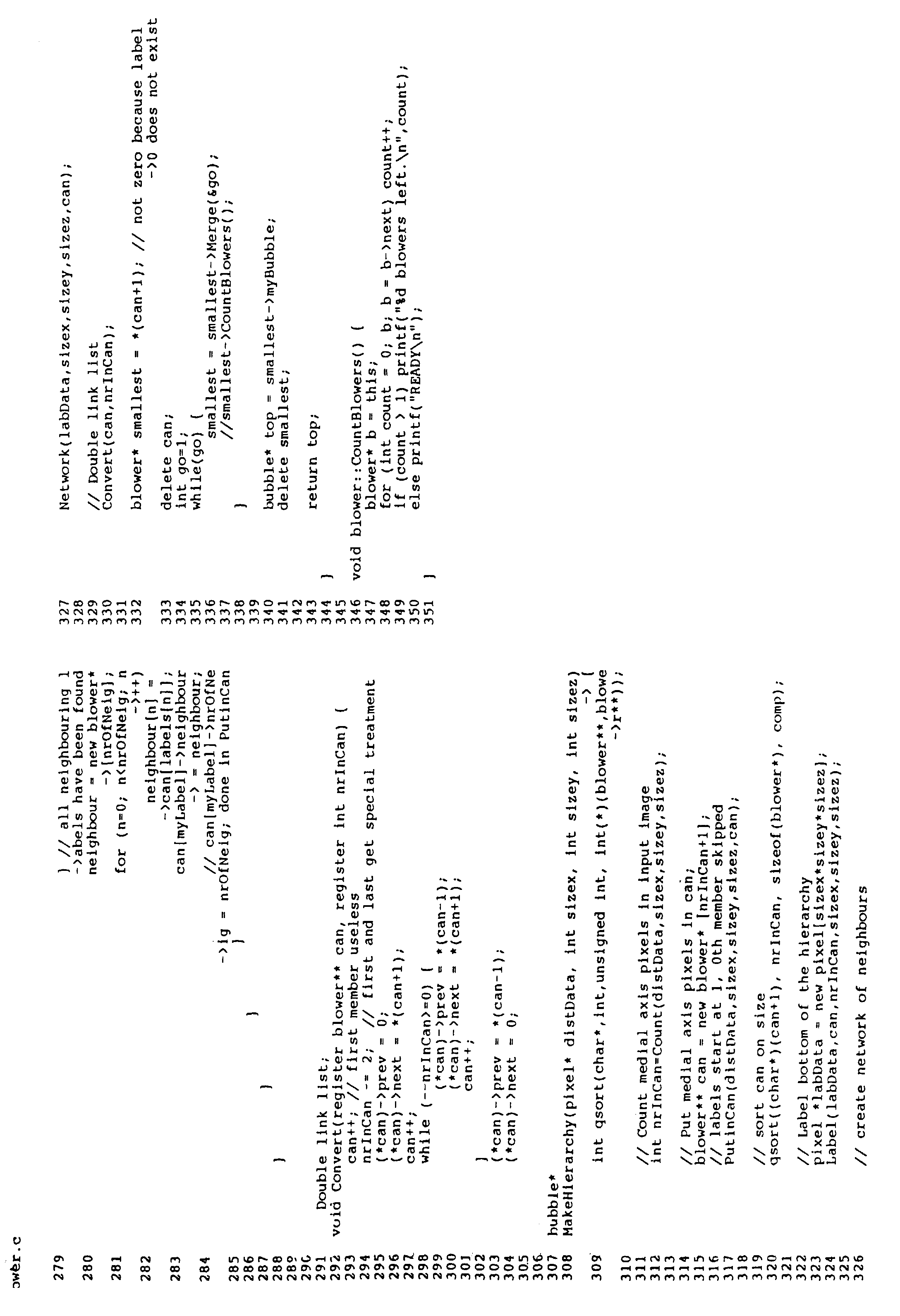

## Claims

1. A method for detecting a potential collision between a first object (O) and a second object, whereby space occupied by the first object is represented by a bubble hierarchy, characterized in that the method includes the steps of:
- locating the medial axis system (B) of the first object,
- creating the bubble hierarchy on this medial axis system (20 - 26), and
- detecting the potential collision by determining whether the second object collides with any of the bubbles in the bubble hierarchy.

2. A method as claimed in Claim 1, wherein the step of creating the hierarchy comprises a top-down procedure of:
- first placing a root bubble which is centred at the centre of the medial axis system and has a radius substantially equal to the maximum distance from said centre to the contour of the first object,
- next, if the medial axis system has a plurality of branch lines, placing a plurality of first successive bubbles each of which encompasses a distinct part of the object which is described by one of said branch lines, and
- then successively dividing each line of the medial axis system into at least two new line parts and placing a sequence of next successive bubbles each of which encompasses a distinct part of the first object which is described by one of said new line parts.

3. A method as claimed in Claim 1, wherein the step of creating the hierarchy comprises a bottom-up procedure of:
- first representing the medial axis system as a large plurality of discrete points,
- next placing the centres of a plurality of lowest level bubbles at said discrete points, where the radius of each bubble is equal to the minimum distance from the corresponding centre point to the contour of the first object, and
- then successively creating new bubbles by merging the lowest level bubbles to successively create higher order bubbles into the bubble hierarchy and repeating this step until a single one root bubble remains.

4. A method as claimed in Claim 3, wherein said creating new bubbles is done by merging any smallest bubble remaining with its smallest neighbour(s) to create a new bubble and repeating this step until only one root bubble remains.

5. A method as claimed in Claim 3 or 4, wherein two old bubbles are merged to yield a new bubble in accordance with the formulae:$\text{r' = (r1 + j + r2) / 2}$$\text{x' = 1/2 (x1 + x2 + (r1 - r2) (x1 - x2) / j)}$$\text{y' = 1/2 (y1 + y2 + (r1 - r2) (y1 - y2) / j)}$$\text{z' = 1/2 (z1 + z2 + (r1 - r2) (z1 - z2) / j)}$ wherein r1 and r2 are the radii of the old bubbles, j is the distance between the centres of the old bubbles, (x1, y1, z1) and (x2, y2, z2) are the coordinates of the centres of the old bubbles, r' is the radius of the new bubble, and (x', y', z') are the coordinates of the centre of the new bubble.

6. A robotic controller for detecting a potential collision between a first object (O) and a second object, comprising memory means (30-42) for representing space occupied by the first object by a bubble hierarchy, characterized in that the controller includes computational means for:
- locating the medial axis system (B) of the first object,
- creating the bubble hierarchy on this medial axis system (20 - 26) to be stored in the memory means (30-42), and
- detecting in the memory means (30-42) the potential collision by determining whether the second object collides with any of the bubbles in the bubble hierarchy.

7. A controller as claimed in Claim 6, wherein the computational means include means for creating a hierarchy of bubbles starting from a sequence of lowest level bubbles which have centres that are disposed on the medial axis system.

## Patentansprüche

1. Verfahren zum Detektieren einer möglichen Kollision zwischen einem ersten Objekt (O) und einem zweiten Objekt, wobei von dem ersten Objekt eingenommener Raum durch eine Blasenhierarchie dargestellt wird, dadurch gekennzeichnet, daß das Verfahren die folgenden Schritte enthält:
- Lokalisieren des Mittelachsensystems (B) des ersten Objekts,
- Erzeugen der Blasenhierarchie auf diesem Mittelachsensystem (20-26) und
- Detektieren der möglichen Kollision durch Bestimmung, ob das zweite Objekt mit irgendeiner der Blasen in der Blasenhierarchie kollidiert.

2. Verfahren nach Anspruch 1, wobei der Schritt der Erzeugung der Hierarchie ein Top-down-Verfahren umfaßt mit:
- erst Plazieren einer Ursprungsblase, die am Mittelpunkt des Mittelachsensystems zentriert ist und einen Radius hat, der nahezu gleich dem maximalen Abstand von diesem Mittelpunkt zur Kontur des ersten Objekts ist;
- danach, wenn das Mittelachsensystem eine Vielzahl von Zweiglinien hat, Plazieren einer Vielzahl erster aufeinanderfolgender Blasen, von denen jede einen gesonderten Teil des Objekts umgreift, der durch eine der genannten Zweiglinien beschrieben wird und
- dann sukzessives Aufteilen jeder Linie des Mittelachsensystems in zumindest zwei neue Linienteile und Plazieren einer Folge nächster aufeinanderfolgender Blasen, von denen jede einen gesonderten Teil des ersten Objekts umgreift, der durch einen der genannten neuen Linienteile beschrieben wird.

3. Verfahren nach Anspruch 1, wobei der Schritt der Erzeugung der Hierarchie ein Bottom-up-Verfahren umfaßt mit:
- erst Darstellen des Mittelachsensystems als große Anzahl diskreter Punkte,
- danach Plazieren der Mittelpunkte einer Vielzahl von Blasen niedrigsten Niveaus bei den genannten diskreten Punkten, wo der Radius jeder Blase gleich dem minimalen Abstand von dem entsprechenden Mittelpunkt zur Kontur des ersten Objekts ist und
- dann sukzessives Erzeugen neuer Blasen durch Vereinigen der Blasen niedrigsten Niveaus, um nacheinander Blasen höherer Ordnung in der Blasenhierarchie zu erzeugen, und Wiederholen dieses Schrittes, bis eine einzige Ursprungsblase übrig bleibt.

4. Verfahren nach Anspruch 3, wobei das genannte Erzeugen neuer Blasen durch Vereinigen jeder kleinsten übrigbleibenden Blase mit ihrem(n) kleinsten Nachbarn erfolgt, um eine neue Blase zu erzeugen, und dieser Schritt wiederholt wird, bis nur eine Ursprungsblase übrig bleibt.

5. Verfahren nach Anspruch 3 oder 4, wobei zwei alte Blasen vereinigt werden, um eine neue Blase zu erhalten, gemäß den Formeln:$\text{r' = (r1+j+r2)/2}$$\text{x' = 1/2(x1+x2+(r1-r2)(x1-x2)/j)}$$\text{y' = 1/2(y1+y2+(r1-r2)(y1-y2)/j)}$$\text{z' = 1/2(z1+z2+(r1-r2)(z1-z2)/j),}$ wobei r1 und r2 die Radien der alten Blasen sind, j der Abstand zwischen den Mittelpunkten der alten Blasen ist, (x1,y1,z1) und (x2,y2,z2) die Koordinaten der Mittelpunkte der alten Blasen sind, r' der Radius der neuen Blase ist und (x',y',z') die Koordinaten des Mittelpunkts der neuen Blase sind.

6. Robotersteuerung zum Detektieren einer möglichen Kollision zwischen einem ersten Objekt (O) und einem zweiten Objekt, mit Speichermitteln (30-42) zum Darstellen des von dem ersten Objekt eingenommenen Raumes durch eine Blasenhierarchie, dadurch gekennzeichnet, daß die Steuerung Computermittel enthält zum:
- Lokalisieren des Mittelachsensystems (B) des ersten Objekts,
- Erzeugen der in den Speichermitteln (30-42) zu speichernden Blasenhierarchie auf diesem Mittelachsensystem (20-26) und
- Detektieren in den Speichermitteln (30-42) der möglichen Kollision durch Bestimmung, ob das zweite Objekt mit irgendeiner der Blasen in der Blasenhierarchie kollidiert.

7. Steuerung nach Anspruch 6, wobei die Computermittel Mittel zum Erzeugen einer Hierarchie aus Blasen enthalten, ausgehend von einer Folge von Blasen niedrigsten Niveaus, mit Mittelpunkten, die auf dem Mittelachsensystem liegen.

## Revendications

1. Méthode de détection d'une collision potentielle entre un premier objet (O) et un second objet, dans laquelle l'espace occupé par le premier objet est représenté par une hiérarchie de bulles, caractérisée en ce que la méthode comprend les étapes consistant à :
- situer le système d'axes intermédiaires (B) du premiers objet,
- créer la hiérarchie de bulles sur ce système d'axes intermédiaires (20-26), et
- détecter la collision potentielle en déterminant si le second objet heurte l'une quelconque des bulles dans la hiérarchie de bulles.

2. Méthode suivant la revendication 1, caractérisée en ce que l'étape de création de hiérarchie comprend un processus hiérarchisé de haut en bas consistant à :
- placer d'abord une bulle de racines qui est centrée au centre du système d'axes intermédiaires et qui possède un rayon sensiblement égal à la distance maximum entre le centre précité et le contour du premier objet,
- ensuite, si le système d'axes intermédiaires possède plusieurs lignes de branche, placer plusieurs premières bulles successives, dont chacune renferme une partie distincte de l'objet qui est décrit par l'une desdites lignes de branche, et
- diviser ensuite successivement chaque ligne du système d'axes intermédiaires en au moins deux nouvelles parties de ligne et placer une suite de bulles successives suivantes, dont chacune renferme une partie distincte du premier objet qui est décrit par l'une desdites nouvelles parties de ligne.

3. Méthode suivant la revendication 1, caractérisée en ce que l'étape de création de hiérarchie comprend un processus hiérarchisé de bas en haut consistant à :
- d'abord représenter le système d'axes intermédiaires comme une multitude étendue de points discrets,
- placer ensuite les centres d'une multitude de bulles de niveau inférieur auxdits points discrets, où le rayon de chaque bulle est égal à la distance minimum entre le point central correspondant et le contour du premier objet, et
- créer ensuite successivement de nouvelles bulles par la fusion des bulles de niveau inférieur afin de créer successivement des bulles d'ordre plus élevé dans la hiérarchie de bulles et répéter cette étape jusqu'à ce qu'il ne reste qu'une seule bulle de racine.

4. Méthode suivant la revendication 3, caractérisée en ce que ladite création de nouvelles bulles est effectuée par la fusion de toute bulle plus petite restante avec sa plus petite voisine(s) afin de créer une nouvelle bulle et la répétition de cette étape jusqu'à ce qu'il reste seulement une bulle de racine.

5. Méthode suivant la revendication 3 ou 4, caractérisée en ce que deux bulles anciennes sont fusionnées pour engendrer une nouvelle bulle selon les formules :$\text{r' = (r1 + j + r2)/2}$$\text{x' = 1/2 (x1 + x2 + (r1 - r2)(x1 - x2)/j)}$$\text{y' = 1/2 (y1 + y2 + (r1 - r2)(y1 - y2)/j)}$$\text{z' = 1/2 (z1 + z2 + (r1 - r2)(z1 - z2)/j)}$ dans lesquelles r1 et r2 représentent les rayons des anciennes bulles, j la distance entre les centres des anciennes bulles, (x1, y1, z1) et (x2, y2, z2) les coordonnées des centres des anciennes bulles, r' le rayon de la nouvelle bulle, et (x', y', z') les coordonnées du centre de la nouvelle bulle.

6. Appareil de commande de robot pour détecter une collision potentielle entre un premier objet (O) et un second objet, comprenant des moyens de mémoire (30-42) pour représenter l'espace occupé par le premier objet par une hiérarchie de bulles, caractérisé en ce que l'appareil de commande comprend des moyens de calcul pour :
- situer le système d'axes intermédiaires (B) du premier objet,
- créer la hiérarchie de bulles sur ce système d'axes intermédiaires (20-26) devant être stocké dans les moyens de mémoires (30-42), et
- détecter dans les moyens de mémoire (30-42) la collision potentielle en déterminant si le second objet heurte l'une quelconque des bulles dans la hiérarchie de bulles.

7. Appareil de commande suivant la revendication 6, caractérisé en ce que les moyens de calcul comprennent des moyens pour créer une hiérarchie de bulles en partant d'une suite de bulles de niveau inférieur possédant des centres qui sont disposés sur le système d'axes intermédiaires.
